# EUROPEAN PATENT APPLICATION

(11) **EP 4 775 861 A1**
(43) Date of publication of application: **15.07.2026**
(21) Application number: 24862824.0
(22) Date of filing: 04.09.2024
(51) Int. Cl.: F16K 51/00

(54) **VALVE DEVICE**

(30) Priority: 05.09.2023 JP 2023143629
(71) Applicant: Neriki Valve Co., Ltd., Amagasaki-shi Hyogo 661-0975 (JP)
(72) Inventor: WATANABE, Mitsuaki, Amagasaki-shi, Hyogo 661-0975 (JP); ICHITSUBO, Atsushi, Amagasaki-shi, Hyogo 661-0975 (JP)
(74) Representative: HKW Intellectual Property PartG mbB
(86) International application number: PCT/JP2024/031697
(87) International publication number: WO 2025/053172

(57) **Abstract**

The object is to provide a valve device 1 securing a first filter 70 to a valve body 10 without breaking the first filter 70 to inhibit flow of foreign substances. The valve device 1 includes the valve body 10 including an attachment portion 11 attachable to a cylinder and having a fluid flow path F, through which gas is flowable, formed therein, and includes an open/close valve 24 opening or closing the fluid flow path F in the valve body 10. The valve device 1 includes a first filter 70 attached to a filter attachment portion 14 provided in the fluid flow path F of the attachment portion 11; and a securing member 80 securing the first filter 70 to the filter attachment portion 14. The first filter 70 includes a filter body 71 formed of sintered metal beads to have such a shape as to cause at least a portion thereof to cross a flow direction D of the gas, and a metallic filter flange 72 formed to have a generally annular and generally flat plate-like shape provided along a circumferential edge of the filter body 71 and having the securing member 80 pressed thereto, the filter flange 72 being formed integrally with the filter body 71.

## Description

### TECHNICAL FIELD

The present invention relates to a valve device attachable to a cylinder to be filled with a fluid such as, for example, high-pressure gas or the like.

### BACKGROUND ART

Conventionally, as a valve device causing a fluid such as high-pressure gas or the like to flow by opening or closing an open/close valve, a container valve device attachable to a gas cylinder or a valve device connectable to an assembly, called a bundle device or a cradle device, of a plurality of cylinders.

One type of valve device includes a filter that inhibits foreign substances from flowing, together with the fluid, through a fluid flow path provided inside a valve body.

As such a filter, a sintered filter formed of a sintered metal material described in, for example, Patent Literature 1 is known.

In Patent Literature 1, the filter is press-fit into a filter attachment portion provided in a fluid flow path and thus is secured to the filter attachment portion.

However, the sintered filter has a lower mechanical strength than that of, for example, a filter formed of a stack of metal mesh layers. Therefore, the sintered filter as described in Patent Literature 1 has an undesirable possibility of being deformed or broken by a press load caused by the press-fitting.

### CITATION LIST

### PATENT LITERATURE

Patent Literature 1: Japanese Laid-Open Patent Publication No. 2009-150485

### SUMMARY OF INVENTION

### TECHNICAL PROBLEM

In light of the above-described problems, the present invention has an object of providing a valve device securing a filter to a valve body without breaking the filter and thus preventing flow of foreign substances.

### SOLUTION TO PROBLEM

The present invention is directed to a valve device including a valve body that includes an attachment portion attachable to an attached portion and has a fluid flow path, through which a fluid is flowable, formed therein, and including an open/close valve opening or closing the fluid flow path in the valve body. The valve device includes a filter attached to a filter attachment portion provided in the fluid flow path of the attachment portion; and a securing member securing the filter to the filter attachment portion. The filter includes a filter body formed of sintered metal beads to have such a shape as to cause at least a portion thereof to cross a flow direction of the fluid, and a metallic annular body formed to have an annular and generally flat plate-like shape provided along a circumferential edge of the filter body and having the securing member pressed thereto, the annular body being formed integrally with the filter body.

The above-mentioned attached portion refers to a cylinder or a pipe connected to the cylinder.

The above-mentioned valve device refers to a container valve device attached to a cylinder for use, a pipe valve device connected to a pipe for use, a valve device connected, for use, to an assembly, called a cradle device or a bundle device, which is an assembly of a plurality of cylinders, or the like.

The above-mentioned filter body refers to a three-dimensional filter or a flat plate-like filter.

The above-mentioned securing member refers to a member screwed with the filter attachment portion to press the filter, or a press-fit jig press-fitting the filter into the filter attachment portion.

According to the present invention, the securing member is pressed onto the annular body of the filter. Therefore, when the filter is to be secured to the filter attachment portion, the securing to the filter attachment portion is performed without pressing the filter body formed of sintered metal beads.

Accordingly, the valve device prevents a situation where the filter body, which is formed of sintered metal beads and thus has a low mechanical strength, is deformed by being secured to the filter attachment portion and as a result, a filtering precision is changed or the filter body is broken. Therefore, the valve device secures the filter to the valve body without breaking the filter and thus inhibits flow of foreign substances.

In an embodiment of the present invention, the filter body may be formed to have a three-dimensional shape protruding in a protrusion direction along a thickness direction of the annular body.

According to this configuration, the filter body has a larger surface area with certainty as compared with the case of, for example, a flat plate-like filter body. With this configuration, the valve device suppresses decrease in the flowability of the fluid.

In an embodiment of the present invention, the filter body may be formed to have a generally truncated conical shape having a diameter that gradually becomes smaller as the filter body extends in the protrusion direction.

According to this configuration, the filter body has a larger surface crossing the flow direction as compared with the case of, for example, a bottomed cylindrical filter body. Therefore, the valve device suppresses more the decrease in the flowability of the fluid and inhibits the flow of foreign substances.

In addition, it is more difficult for the securing member to contact the filter body than, for example, a bottomed cylindrical filter body. Therefore, when pressing the securing member onto the annular body of the filter, the valve device prevents the filter body from being broken by contact of the filter body with the securing member.

In an embodiment of the present invention, the annular body may be formed integrally with the filter body by sintering.

According to this configuration, the filter body and the annular body are integrated with each other with certainty.

Accordingly, the valve device prevents the filter body from being separated from the annular body by the pressure caused at the time of the passage of the fluid, and thus inhibits the flow of foreign substances with certainty.

In an embodiment of the present invention, the annular body may have a recessed portion having a size generally equal to that of an outer circumferential surface of the filter body, recessed in the thickness direction of the annular body, and having at least a portion of the filter body fit thereto.

According to this configuration, at least a portion of the filter body is fit into the recessed portion of the annular body, so that an area along which the filter body and the annular body contact each other has a sufficiently large size with certainty. Therefore, the valve device integrates the filter body and the annular body to each other with certainty.

In addition, the filter body is positioned with respect to the annular body by the recessed portion. Therefore, the valve device prevents, with more certainty, the securing member from contacting the filter body.

Accordingly, the valve device allows the filter to be secured to the valve body without breaking the filter body and to have an improved strength.

In an embodiment of the present invention, an innermost circumferential surface of the annular body may be formed to have a size generally equal to that of an inner circumferential surface of the fluid flow path as seen in the thickness direction of the annular body.

According to this configuration, the valve device prevents the flow of the fluid from being inhibited by the annular body and inhibits the flow of foreign substances.

In an embodiment of the present invention, the securing member may be a tubular body having an inner circumferential surface larger than an inner circumferential surface of the annular body, and may be screwed with the filter attachment portion.

According to this configuration, the filter is attached or detached merely by screwing the securing member into, or out of, the valve body. Therefore, as compared with the case where the filter is press-fit to be secured, the filter is secured more firmly and is attached and detached more easily.

In addition, while the securing member is screwed into, or out of, the valve body, the filter body and the securing member do not slide against each other. Therefore, the valve device prevents the filter body from being broken by the sliding of the filter body and the securing member.

In an embodiment of the present invention, the filter body may be formed to have a cross-section having a recessed portion such that the filter body protrudes in the protrusion direction and may have an inner circumferential surface having an area size defined based on a cross-sectional area of the fluid flow path and the filtering precision.

According to this configuration, the valve device suppresses more the decrease in the flowability of the fluid and inhibits the flow of foreign substances.

### ADVANTAGEOUS EFFECTS OF INVENTION

The present invention provides a valve device securing a filter to a valve body without breaking the filter and thus preventing flow of foreign substances.

### BRIEF DESCRIPTION OF DRAWINGS

FIG. 1 is a front view showing an external appearance of a valve device.
FIG. 2 is a cross-sectional view of FIG. 1 taken along line A-A in FIG. 1.
FIG. 3 is a cross-sectional view of FIG. 1 taken along line B-B in FIG. 1.
FIG. 4 is a cross-sectional view showing a configuration of a third flow path.
FIG. 5 is an enlarged cross-sectional view of a depressurization safety valve mechanism.
FIG. 6 is a perspective sectional view showing an external appearance of the depressurization safety valve mechanism in a disassembled state.
FIG. 7 is a perspective sectional view showing an external appearance of the depressurization safety valve mechanism in a disassembled state.
FIG. 8 is an enlarged cross-sectional view of a check valve mechanism.
FIG. 9 is a perspective sectional view showing an external appearance of the check valve mechanism in a disassembled state.
FIG. 10 illustrates an operation of the depressurization safety valve mechanism.
FIG. 11 illustrates an operation of the depressurization safety valve mechanism.
FIG. 12 illustrates an operation of the check valve mechanism.
FIG. 13 is a perspective sectional view showing an external appearance of a first filter and a securing member.
FIG. 14 is a schematic structural view showing an overall configuration of a bundle device to which the valve device is connectable.
FIG. 15 shows cross-sectional views of the first filter in other embodiments.

### DESCRIPTION OF EMBODIMENTS

Hereinafter, an embodiment of the present invention will be described with reference to the drawings.

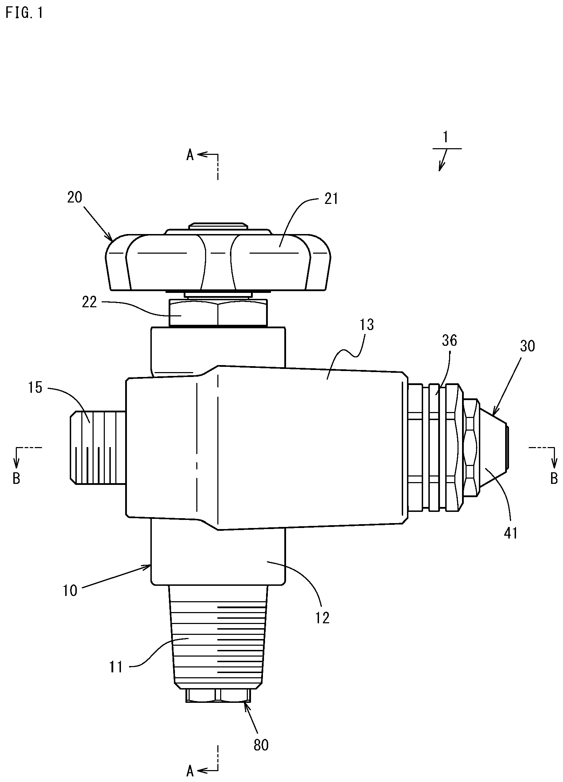

In this embodiment, with reference to FIG. 1 through FIG. 13, a valve device 1 connectable to a cylinder storing gas will be described.

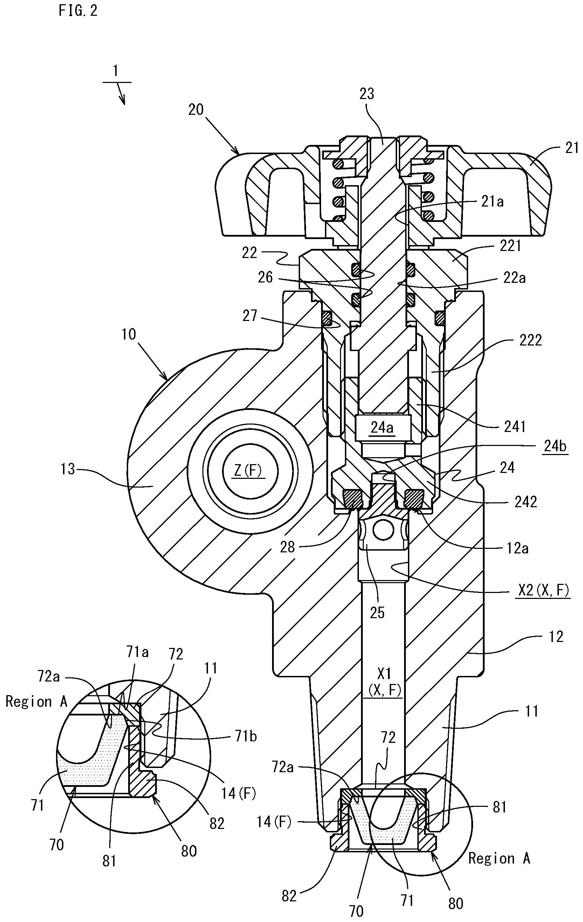

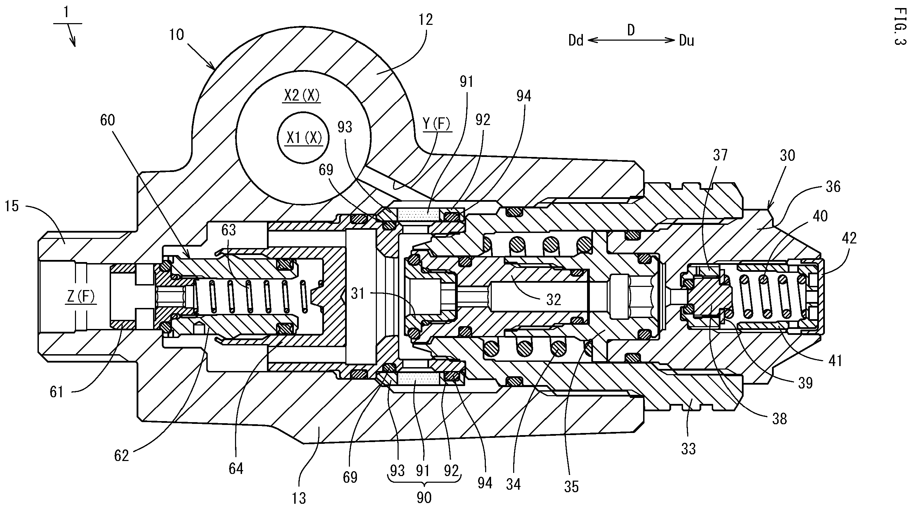

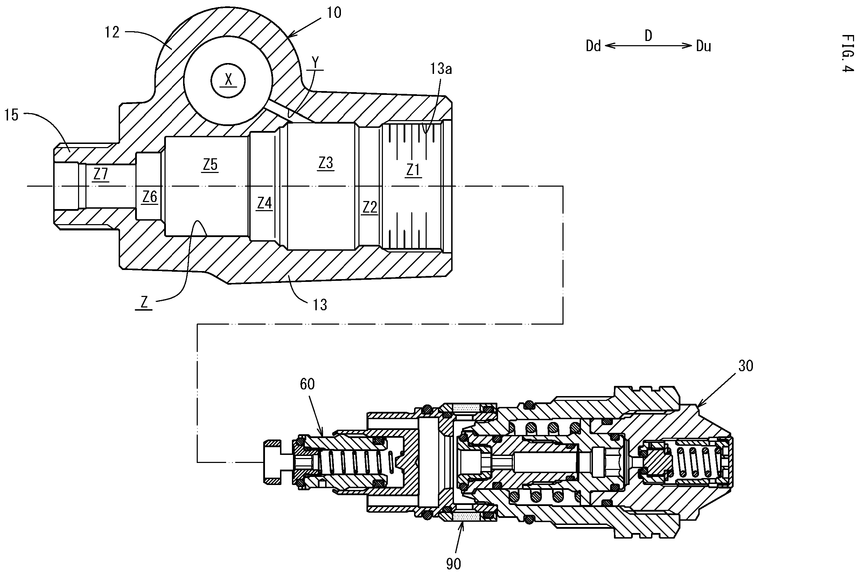

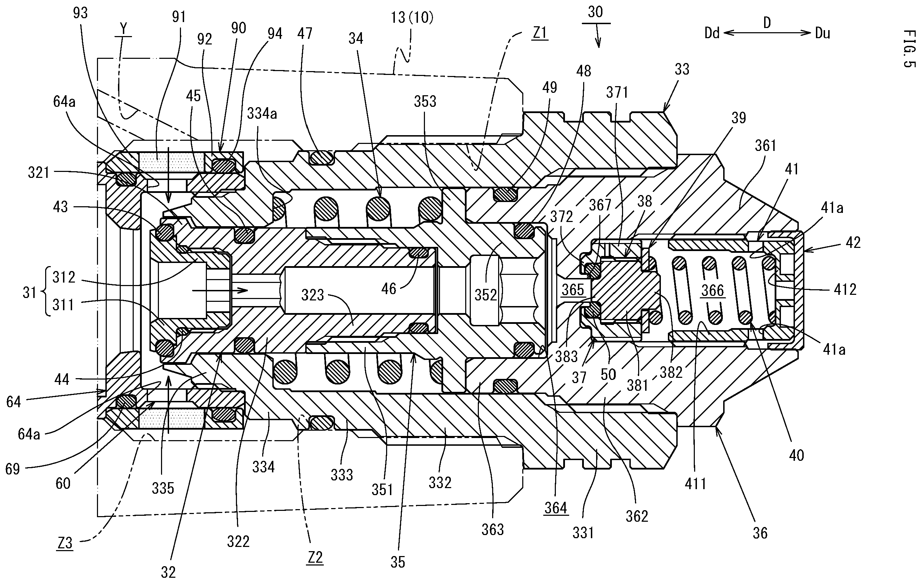

FIG. 1 is a front view of the valve device 1. FIG. 2 is a cross-sectional view of FIG. 1 taken along line A-A in FIG. 1. FIG. 3 is a cross-sectional view of FIG. 1 taken along line B-B in FIG. 1. FIG. 4 is a cross-sectional view illustrating a configuration of a third flow path Z. FIG. 5 is an enlarged cross-sectional view of a depressurization safety valve mechanism 30.

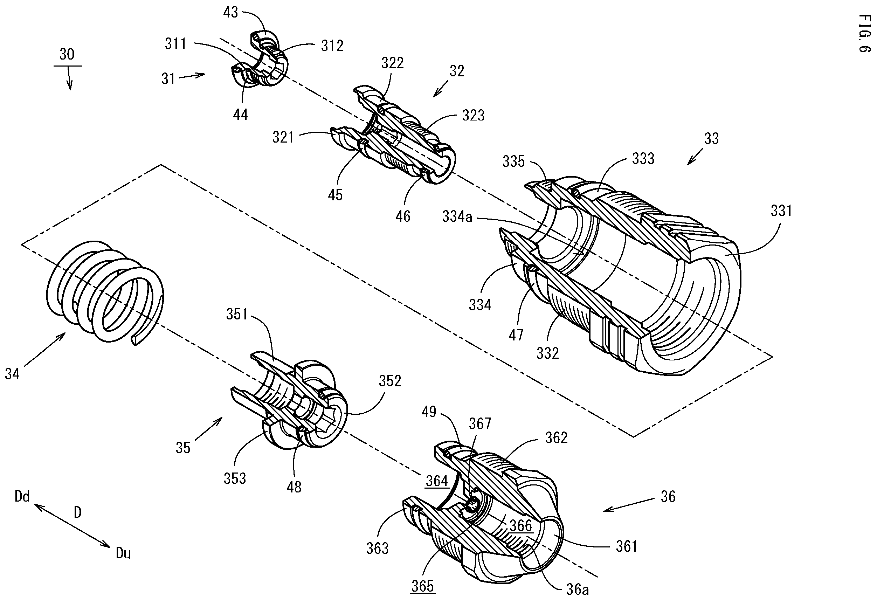

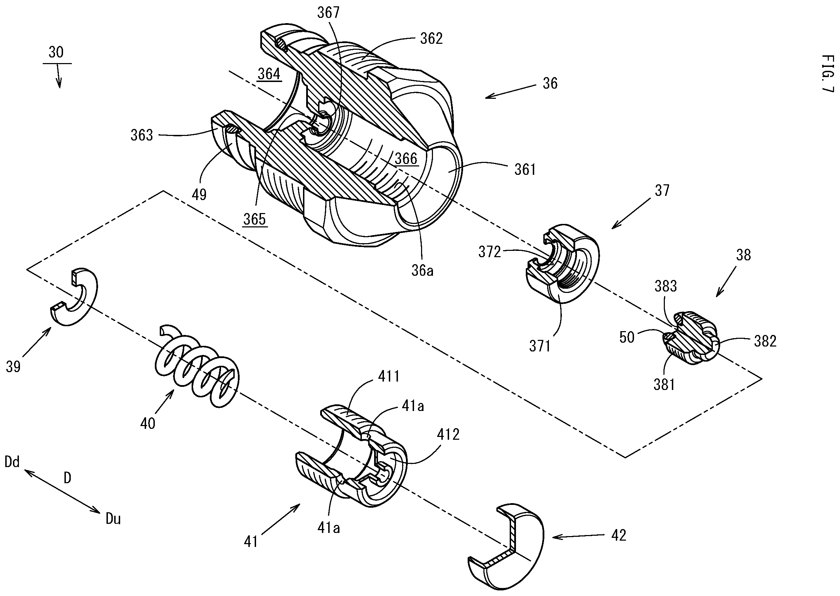

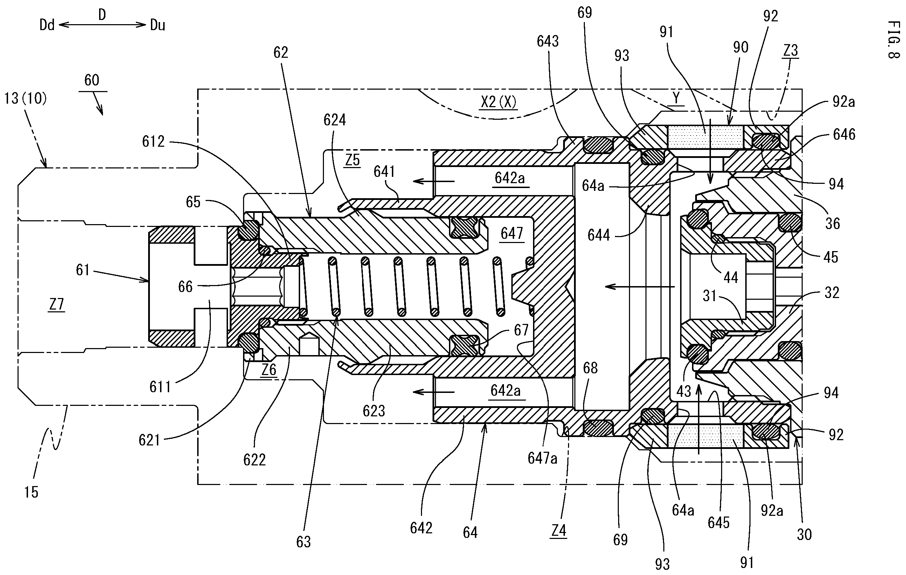

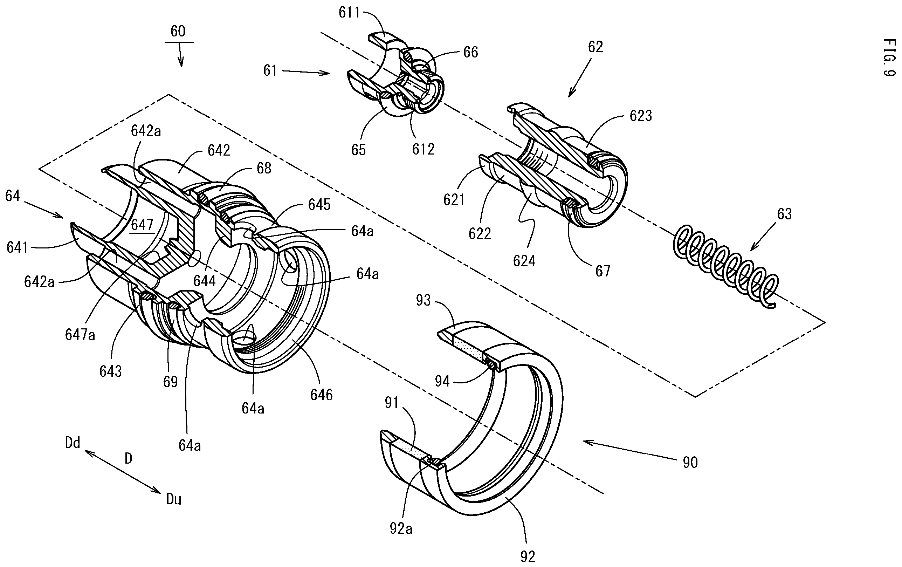

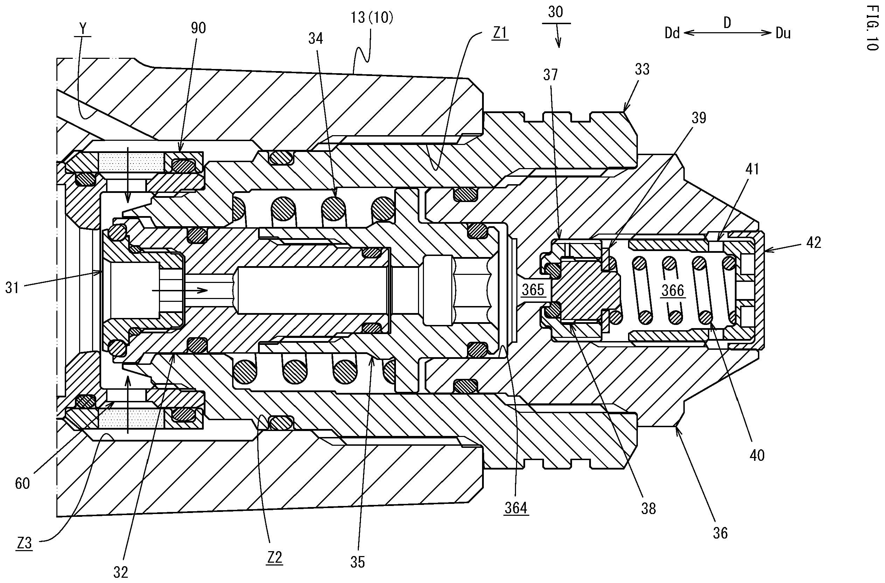

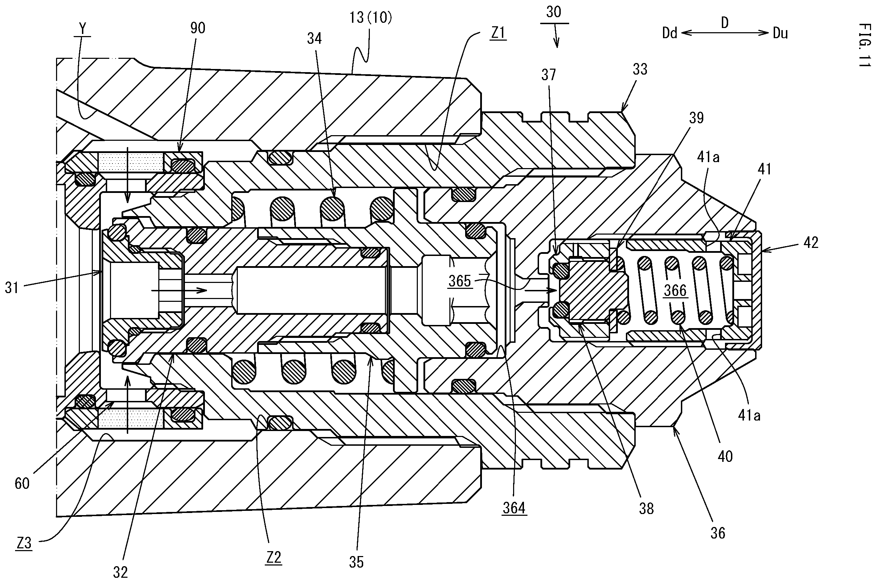

FIG. 6 and FIG. 7 are each a perspective sectional view of the depressurization safety valve mechanism 30. FIG. 8 is an enlarged cross-sectional view of a check valve mechanism 60. FIG. 9 is a perspective sectional view of the check valve mechanism 60. FIG. 10 illustrates an operation of the depressurization safety valve mechanism 30. FIG. 11 illustrates an operation of the depressurization safety valve mechanism 30.

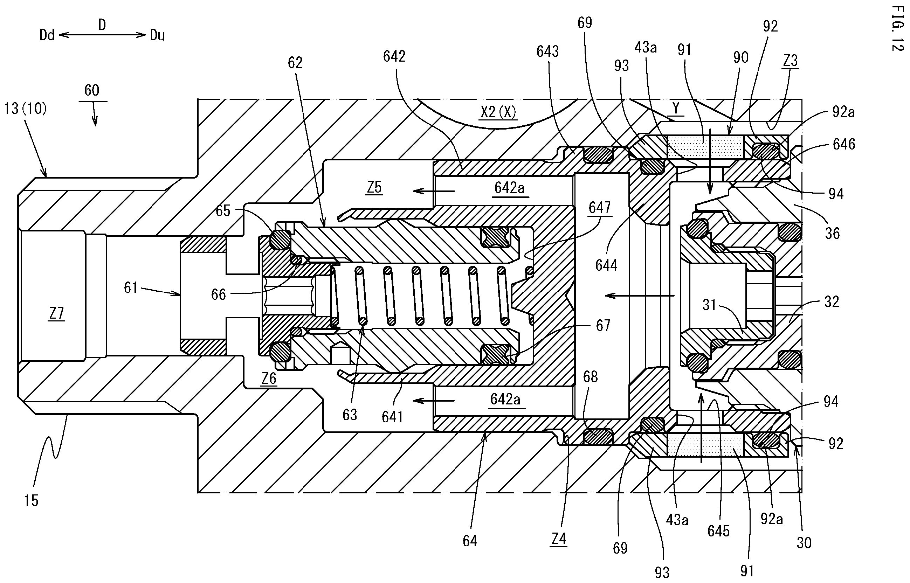

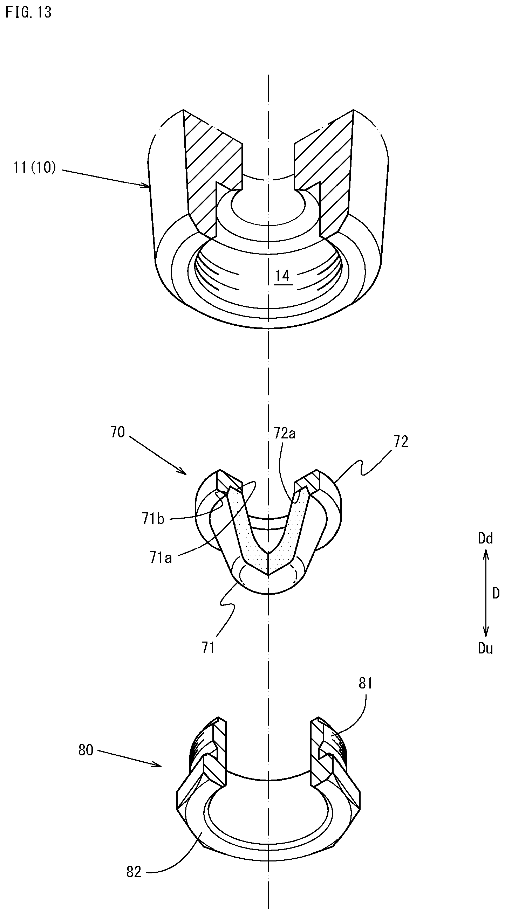

FIG. 12 illustrates an operation of the check valve mechanism 60. FIG. 13 is a perspective sectional view of a first filter 70 and a securing member 80.

In FIG. 5 and FIG. 8, a valve body 10 is shown with two-dot chain line for clearer illustration.

In FIG. 1, the top side corresponds to a top side of the valve device 1. In FIG. 1, the bottom side corresponds to a bottom side of the valve device 1.

In the figures, arrow D represents a direction in which gas flows (hereinafter, referred to as a "flow direction D"). In the figures, arrow Du represents an upstream side of the flow direction D (hereinafter, referred to as an "upstream side Du"). In the figures, arrow Dd represents a downstream side of the flow direction D (hereinafter, referred to as a "downstream side Dd").

As shown in FIG. 1 and FIG. 2, the valve device 1 includes the valve body 10 having an inner space through which the gas is flowable, an open/close valve mechanism 20 attached to the valve body 10 and regulating the flow of the gas, and the depressurization safety valve mechanism 30, which is a depressurization mechanism.

The valve device 1 further includes the check valve mechanism 60 (see FIG. 3), which is a residual pressure retaining mechanism, the first filter 70 (see FIG. 2) attached to a bottom end of the valve body 10, and the securing member 80 (see FIG. 2) securing the first filter 70 to the valve body 10.

As shown in FIG. 3, the valve device 1 further includes a second filter 90 located inside the valve body 10 and having the depressurization safety valve mechanism 30 and the check valve mechanism 60 inserted thereto.

In more detail, as shown in FIG. 1, the valve body 10 of the valve device 1 includes an attachment portion 11 and a body portion 12 extending in an up-down direction, and an outlet portion 13 extending in a direction generally perpendicular to the up-down direction as seen in a front view. The attachment portion 11, the body portion 12 and the outlet portion 13 are formed integrally with each other.

Specifically, as shown in FIG. 1, the attachment portion 11 has a truncated conical shape with a bottom portion thereof having a smaller diameter. The attachment portion 11 has male threads (represented with no reference sign) formed in an outer circumferential surface thereof. The male threads are screwable into a screw hole provided in a neck ring of the cylinder not shown.

The attachment portion 11 has a filter attachment portion 14 (see FIG. 13) formed therein. The filter attachment portion 14 is formed by recessing a bottom surface of the attachment portion 11 upward so as to be generally circular as seen in a bottom view. The first filter 70 is attached to the filter attachment portion 14.

An inner circumferential surface of the filter attachment portion 14 has female threads (represented with no reference sign) formed therein, into which the securing member 80 is screwed.

As shown in FIG. 1, the body portion 12 is formed to have a generally cylindrical shape having a diameter larger than that of a large-diameter portion of the attachment portion 11, and extends upward from the attachment portion 11.

As shown in FIG. 1, the outlet portion 13 has a generally cylindrical shape having a diameter larger than that of the diameter of the body portion 12, and is formed integrally with the body portion 12 at a generally central position of the body portion 12 in the up-down direction.

The outlet portion 13 is formed such that two ends thereof in the direction generally perpendicular to the up-down direction as seen in a front view protrude from the body portion 12.

The outlet portion 13 includes a connection portion 15 at one end thereof in the direction generally perpendicular to the up-down direction as seen in a front view, that is, at one end thereof in an axial direction of the outlet portion 13. A consuming device that consumes the gas is screwable into, and thus connectable to, the connection portion 15.

As shown in FIG. 2 and FIG. 3, the valve body 10 having such a configuration has, formed therein, a first flow path X running through the attachment portion 11 and the body portion 12 in an axial direction of the attachment portion 11 (in the up-down direction), a second flow path Y extending from the first flow path X to the inside of the outlet portion 13, and a third flow path Z running through the outlet portion 13 in the axial direction of the outlet portion 13 (the direction generally perpendicular to the up-down direction as seen in a front view).

The filter attachment portion 14, the first flow path X, the second flow path Y and the third flow path Z described above of the valve body 10 form a fluid flow path F communicating from the filter attachment portion 14 of the attachment portion 11 to the connection portion 15 of the outlet portion 13.

As shown in FIG. 2 and FIG. 3, in the fluid flow path F having the above-described configuration, the open/close valve mechanism 20 and the first filter 70 are located in the first flow path X, and the depressurization safety valve mechanism 30, the check valve mechanism 60 and the second filter 90 are located in the third flow path Z.

Specifically, as shown in FIG. 2, the first flow path X has the axial direction of the attachment portion 11 and the body portion 12 as a flow direction D thereof. The first flow path X is formed of a through-hole communicating to the filter attachment portion 14 and running through the attachment portion 11 and the body portion 12. The first flow path X has a generally circular cross-section.

In more detail, as shown in FIG. 2, the first flow path X includes a flow path bottom portion X1, which is a space extending from the filter attachment portion 14 to a generally central position or the vicinity thereof in the up-down direction of the body portion 12 and having a generally circular cross-section, and a flow path top portion X2, which is a space extending from the flow path bottom portion X1 to a top end surface of the body portion 12 and having a generally circular cross-section of a diameter larger than that of the flow path bottom portion X1.

As shown in FIG. 2, the flow path top portion X2 also acts as an open/close valve mechanism attachment portion, to which the open/close valve mechanism 20 is attached. The flow path top portion X2 has female threads (represented with no reference sign) formed in an inner circumferential surface thereof. The female threads are screwed with the open/close valve mechanism 20.

The flow path top portion X2 has a valve seat 12a, protruding upward along an opening edge of the flow path bottom portion X1, formed on a bottom surface of the flow path top portion X2.

As shown in FIG. 4, the second flow path Y causes the flow path top portion X2 of the first flow path X and the third flow path Z (a third space Z3 of the third flow path Z described below) to communicate to each other. The second flow path Y is formed to have a flow direction D crossing the flow direction D of the first flow path X and also crossing a flow direction D of the third flow path Z.

As shown in FIG. 3 and FIG. 4, the third flow path Z has the axial direction of the outlet portion 13 as the flow direction D thereof. The third flow path Z is formed of a through-hole communicating to the flow path top portion X2 of the first flow path X via the second flow path Y and running through the outlet portion 13, and has a generally circular cross-section.

As shown in FIG. 4, the third flow path Z includes a first space Z1, a second space Z2, the third space Z3, a fourth space Z4, a fifth space Z5, a sixth space Z6 and a seventh space Z7 coupled in the axial direction of the outlet portion 13. These spaces are formed from an end surface, of the outlet portion 13, opposite to the connection portion 15 to the connection portion 15, and have different diameters from each other.

In more detail, in the third flow path Z, the first space Z1 formed in the end surface, of the outlet portion 13, opposite to the connection portion 15 has a largest diameter. The second space Z2 has a diameter slightly smaller than that of the first space Z1. The third space Z3 has an outer diameter generally equal to that of the first space Z1. The fourth space Z4 has a diameter smaller than that of the third space Z3.

Further in the third flow path Z3, the fifth space Z5 has a diameter smaller than that of the fourth space Z4. The sixth space Z6 has a diameter smaller than that of the fifth space Z5. The seventh space Z7 formed in an end surface of the connection portion 15 has a diameter smaller than that of the sixth space Z6.

In the third flow path Z having such a configuration, the depressurization safety valve mechanism 30 is located in the first space Z1, the second space Z2 and the third space Z3. The check valve mechanism 60 is located in the third space Z3, the fourth space Z4, the fifth space Z5, the sixth space Z6 and the seventh space Z7. The second filter 90 is located in the third space Z3.

As shown in FIG. 4, the first space Z1 of the third flow path Z has female threads 13a formed in a circumferential surface thereof. The female threads 13a are screwed with the depressurization safety valve mechanism 30.

As shown in FIG. 2, the open/close valve mechanism 20 of the valve device 1 includes a rotatable handle 21, a gland nut 22, a spindle 23, an open/close valve 24 and a tip member 25 provided at a tip of the open/close valve 24, which are assembled together in this order from the top side to the bottom side.

Specifically, the rotatable handle 21 is formed to have a curved, generally cloud shape, as seen in a plan view, having a wavy outer circumferential edge protruding in eight directions, and includes a fitting portion 21a fit into a top portion of the spindle 23.

As shown in FIG. 2, the gland nut 22 includes a hexagonal head 221 having a through-hole 22a, through which the spindle 23 is inserted, and a cylindrical portion 222 having a generally cylindrical shape of an outer diameter smaller than that of the head 221 and extending downward from a bottom surface of the head 221.

As shown in FIG. 2, the through-hole 22a of the gland nut 22 has two recessed grooves (represented with no reference sign) formed in a circumferential surface thereof while having a predetermined interval therebetween in the up-down direction. O-rings 26, which are elastic members, are fit into the recessed grooves to seal a gap between the gland nut 22 and the spindle 23.

Meanwhile, the cylindrical portion 222 has an O-ring 27 fit into a recessed groove (represented with no reference sign) formed in an outer circumferential surface thereof, at a top end or in the vicinity thereof, in a circumferential direction. The O-ring 27 is an elastic member that seals a gap between the cylindrical portion 222 and the flow path top portion X2 of the first flow path X.

The cylindrical portion 222 of the gland nut 22 has male threads (represented with no reference sign) formed in the outer circumferential surface thereof, at a position below the O-ring 27. The male threads are screwed into the female threads of the flow path top portion X2 of the first flow path X. The cylindrical portion 222 has female threads (represented with no reference sign), screwed with the open/close valve 24, formed in an inner circumferential surface of the cylindrical portion 222.

As shown in FIG. 2, the spindle 23 is a generally column-like body extending in the up-down direction. The top portion of the spindle 23 is fit into the fitting portion 21a of the rotatable handle 21, and a bottom portion of the spindle 23 is fit into a fitting recessed portion 24a of the open/close valve 24 described below.

As shown in FIG. 2, the open/close valve 24 includes a generally tubular male thread portion 241 screwed into the female threads of the gland nut 22, and a valve body 242 having a diameter larger than that of the male thread portion 241 and provided below the male thread portion 241. The male thread portion 241 and the valve body 242 are formed integrally with each other.

A portion inner to the male thread portion 241 of the open/close valve 24 acts as the fitting recessed portion 24a, into which the bottom portion of the spindle 23 is fit.

Meanwhile, the valve body 242 has a screwable recessed portion 24b, formed to be recessed upward, in a bottom surface thereof. The tip member 25 is screwed into the screwable recessed portion 24b.

The bottom surface of the valve body 242 also has a recessed groove (represented with no reference sign) having a generally annular shape as seen in a bottom view and facing the valve seat 12a in the first flow path X. A sealing member 28, which is an elastic member and has an annular shape as seen in a bottom view, is attached to the recessed groove.

The valve seat 12a eats into the sealing member 28, so that the sealing member 28 seals the flow path bottom portion X1 of the first flow path X.

As shown in FIG. 2, the tip member 25 has a generally cylindrical shape having a diameter generally equal to that of the first flow path X, and is screwed into, and thus attached to, the screwable recessed portion 24b of the open/close valve 24. The tip member 25 cooperates with flow path bottom portion X1 of the first flow path X to guide movement of the open/close valve 24 in the up-down direction.

The depressurization safety valve mechanism 30 of the valve device 1 is a depressurization mechanism operable by a difference in the pressure of the fluid in the third flow path Z to depressurize the gas to a predetermined pressure. The depressurization safety valve mechanism 30 is a composite valve mechanism including a depressurization valve unit (represented with no reference sign) located on the downstream side Dd and a safety valve unit (represented with no reference sign) located on the upstream side Du, which are assembled together.

As shown in FIG. 3 and FIG. 5, the depressurization valve unit of the depressurization safety valve mechanism 30 includes a depressurization valve 31, a depressurization piston 32, a downstream-side housing 33, a first coil spring 34 and a depressurization valve tubular body 35, which are assembled together in this order from the downstream side Dd to the upstream side Du.

Meanwhile, as shown in FIG. 3 and FIG. 5, the safety valve unit of the depressurization safety valve mechanism 30 includes an upstream-side housing 36, a first relief valve 37, a second relief valve 38, a washer 39, a second coil spring 40, a relief valve case 41 and a cap 42, which are assembled together in this order from the downstream side Dd to the upstream side Du.

Specifically, as shown in FIG. 5 and FIG. 6, the depressurization valve 31 includes a flange 311, which is a generally annular flat plate as seen in the flow direction D, and a male thread portion 312 having a generally cylindrical shape of a diameter smaller than that of the flange 311 and screwed into the depressurization piston 32. The depressurization valve 31 including these elements has an inner space running through the depressurization valve 31 in the flow direction D.

The depressurization valve 31 has an O-ring 43 attached to a recessed portion provided in an outer circumferential surface of the flange 311. The O-ring 43 is an elastic member that seals a gap between the flange 311 and the depressurization piston 32. The depressurization valve 31 has an O-ring 44 attached to an outer circumferential surface of the male thread portion 312. The O-ring 44 is an elastic member that seals a gap between the male thread portion 312 and the depressurization piston 32.

As shown in FIG. 5 and FIG. 6, the depressurization piston 32 includes a generally cylindrical female thread portion 321 screwed with the male thread portion 312 of the depressurization valve 31, a generally cylindrical middle portion 322 extending from the female thread portion 321 to the upstream side Du, and a generally cylindrical male thread portion 323 screwed into the depressurization valve tubular body 35. The depressurization piston 32 including these elements is formed to have a generally cylindrical shape and has an inner space running through the depressurization piston 32 in the flow direction D.

As shown in FIG. 5, in a state where the depressurization valve 31 is assembled with the female thread portion 321 of the depressurization piston 32, the female thread portion 321 and the depressurization valve 31 hold the O-ring 43 and the O-ring 44 described above.

The depressurization piston 32 has an O-ring 45 fit into a recessed groove (represented with no reference sign) provided in an outer circumferential surface of the middle portion 322 in the circumferential direction. The O-ring 45 is an elastic member that seals a gap between the middle portion 322 and the downstream-side housing 33.

In addition, the depressurization piston 32 has an O-ring 46 fit into a recessed groove (represented with no reference sign) provided in an outer circumferential surface of the male thread portion 323 in the circumferential direction. The O-ring 46 is an elastic member that seals a gap between the male thread portion 323 and the depressurization valve tubular body 35.

As shown in FIG. 5 and FIG. 6, the downstream-side housing 33 includes a hexagonal tubular female thread portion 331, a generally cylindrical upstream-side male thread portion 332, a generally cylindrical large-diameter tubular portion 333, a generally cylindrical small-diameter cylindrical portion 334, and a generally cylindrical downstream-side male thread portion 335. The downstream-side housing 33 including these elements has a generally tubular shape and has an inner space running through the downstream-side housing 33 in the flow direction D.

In more detail, the female thread portion 331 has a hexagonal tubular shape of an external shape having a diameter larger than that of the first space Z1 of the outlet portion 13. The female thread portion 331 is located so as to be exposed to the outside of the outlet portion 13 in a state of being assembled with the valve body 10.

The upstream-side male thread portion 332 has a generally cylindrical shape, is screwed into the female threads 13a in the third flow path Z, and extends from the female thread portion 331 to the downstream side Dd.

The large-diameter tubular portion 333 has a generally cylindrical shape having a diameter slightly smaller than that of the upstream-side male thread portion 332, and extends from the upstream-side male thread portion 332 to the downstream side Dd.

The large-diameter tubular portion 333 has an O-ring 47 fit into a recessed groove (represented with no reference sign) provided in an outer circumferential surface thereof in the circumferential direction. The O-ring 47 is an elastic member that seals a gap between the large-diameter tubular portion 333 and the second space Z2 of the third flow path Z.

The small-diameter portion 334 has a generally cylindrical shape having a diameter smaller than that of the large-diameter tubular portion 333, extends from the large-diameter tubular portion 333 to the downstream side Dd, and has an annular bottom portion on the downstream side Dd thereof.

The bottom portion of the small-diameter portion 334 is formed as a reaction force support portion 334a, which causes the first spring 34 to generate a reaction force.

The downstream-side male thread portion 335 has a generally cylindrical shape having inner and outer diameters smaller than those of the small-diameter portion 334, extends from the small-diameter portion 334 to the downstream side Dd, and is screwable into the check valve mechanism 60 (check valve housing 64 described below).

As shown in FIG. 5 and FIG. 6, the first coil spring 34 is externally fit to the depressurization valve tubular body 35. The first coil spring 34 is configured to externally fit to the depressurization valve tubular body 35 inside the downstream-side housing 33, to contact, at an end thereof on the downstream side Dd, the reaction force support portion 334a described above, and to urge, by an elastic force thereof, the flange 353 of the depressurization valve tubular body 35 to the upstream side Du.

As shown in FIG. 5 and FIG. 6, the depressurization valve tubular body 35 includes a generally cylindrical female thread portion 351 screwed with the male thread portion 323 of the depressurization piston 32, a generally cylindrical upstream-side tubular portion 352 inserted into the upstream-side housing 36, and a generally annular flange 353 protruding radially outward at a position between the female thread portion 351 and the upstream-side tubular portion 352. The depressurization valve tubular body 35 including these elements has a generally tubular shape and has an inner space running through the depressurization valve tubular body 35 in the flow direction D.

The depressurization valve tubular body 35 has an O-ring 48 fit into a recessed groove (represented with no reference sign) provided in an outer circumferential surface of the upstream-side tubular portion 352 in the circumferential direction. The O-ring 48 is an elastic member that seals a gap between the upstream-side tubular portion 352 and the upstream-side housing 36.

As shown in FIG. 5 and FIG. 6, the upstream-side housing 36 includes an exposed portion 361 exposed to the outside of the downstream-side housing 33, a generally cylindrical male thread portion 362 extending from the exposed portion 361 to the downstream side Dd and screwed into the female thread portion 331 of the downstream-side housing 33, and a generally cylindrical small-diameter portion 363 having a diameter smaller than that of the male thread portion 362.

The upstream-side housing 36 has an O-ring 49 fit into a recessed groove (represented with no reference sign) provided on an outer circumferential surface of the small-diameter portion 363 in the circumferential direction. The O-ring 49 is an elastic member that seals a gap between the small-diameter portion 363 and the upstream-side male thread portion 332 of the downstream-side housing 33.

The upstream-side housing 36 including these elements has a downstream-side recessed portion 364, which is a cylindrical space formed in an end surface of the small-diameter portion 363 to be recessed to the upstream side Du. The upstream-side tubular portion 352 of the depressurization valve tubular body 35 is inserted into the downstream-side recessed portion 364.

In addition, the upstream-side housing 36 has a relief valve housing 366, which is a generally cylindrical space formed in an end surface of the exposed portion 361 to be recessed to the downstream side Dd and communicates to the downstream-side recessed portion 364 via a communication path 365 provided in the male thread portion 362.

The relief valve housing 366 houses, for example, a first relief valve 37 described below.

As shown in FIG. 7, the relief valve housing 366 has female threads 36a, into which the relief valve cases 41 is screwed, formed in an inner circumferential surface thereof, and also has a generally cylindrical fitting portion 367 formed therein, which protrudes from an edge of the communication path 365 to the upstream side Du and to which the first relief valve 37 is externally fit.

The first relief valve 37 includes a second relief valve 38 and an O-ring 50 described below, which form a valve body that seals the communication path 365.

Specifically, as shown in FIG. 5 and FIG. 7, the first relief valve 37 has a generally cylindrical shape having an outer diameter generally equal to that of the relief valve housing 366, and includes a female thread portion 371, to which the second relief valve 38 is screwed, and an annular bottom portion 372 acting as a bottom portion, on the downstream side Dd, of the female thread portion 371 and having the fitting portion 367 of the upstream-side housing 36 fit thereto. The female thread portion 371 and the annular bottom portion 372 are formed integrally with each other.

As shown in FIG. 5 and FIG. 7, the second relief value 38 includes a generally cylindrical male thread portion 381 screwed into the female thread portion 371 of the first relief valve 37, a generally cylindrical upstream-side shaft portion 382 extending from the male thread portion 381 to the upstream side Du, and a generally cylindrical downstream-side shaft portion 383 extending from the male thread portion 381 to the downstream side Dd, which are formed integrally with each other.

Specifically, the upstream-side shaft portion 382 has a generally cylindrical shape having a diameter smaller than that of the male thread portion 381.

The downstream-side shaft portion 383 has a generally cylindrical shape having a diameter generally equal to an inner diameter of the fitting portion 367 of the upstream-side housing 36.

In addition, the downstream-side shaft portion 383 has an O-ring 50 attached thereto. The O-ring 50 is an elastic member that is held by the downstream-side shaft portion 383 and the first relief valve 37 and seals a gap between the downstream-side shaft portion 383 and the communication path 365 of the upstream-side housing 36.

As shown in FIG. 5 and FIG. 7, the washer 39 is formed as an annular flat plate having an inner diameter with which the washer 39 is loosely fit to the upstream-side shaft portion 382 of the second relief valve 38.

As shown in FIG. 5 and FIG. 7, the second coil spring 40 is located between the washer 39 and the relief valve case 41 and externally fit to the upstream-side shaft portion 382 of the second relief valve 38.

The second coil spring 40 is configured to contact, at an end thereof on the upstream side Du, a bottom portion 412 of the relief valve case 41 described below, and to urge, by an elastic force thereof, the second relief valve 38 to the downstream side Dd.

As shown in FIG. 5 and FIG. 7, the relief valve case 41 has a generally cylindrical shape having an inner diameter with which the second coil spring 40 is allowed to be housed in the relief valve case 41, and includes a male thread portion 411 screwed into the relief valve housing 366 of the upstream-side housing 36, and the bottom portion 412 provided at an opening, on the upstream side Du, of the male thread portion 411. The male thread portion 411 and the bottom portion 412 are formed integrally with each other to provide a bottomed cylindrical shape.

The male thread portion 411 of the relief valve case 41 has a plurality of through-holes 41a (see FIG. 5) formed in the circumferential direction. The through-holes 41a run through the male thread portion 411 in a radial direction thereof.

As shown in FIG. 5 and FIG. 7, the cap 42 has an inner diameter with which the relief valve case 41 is allowed to be housed in the cap 42, and has a bottomed tubular shape including a bottom portion on the upstream side Du. The cap 42 is attached to the relief valve housing 366 of the upstream-side housing 36.

The check valve mechanism 60 of the valve device 1 is a residual pressure retaining mechanism operable by a difference in the pressure of the fluid in the third flow path Z to cause a desired pressure of gas to remain in the cylinder.

As shown in FIG. 8 and FIG. 9, the check valve mechanism 60 includes a check valve 61, a check valve piston 62, a third coil spring 63 and a check valve housing 64, which are assembled together in this order from the downstream side Dd to the upstream side Du.

Specifically, as shown in FIG. 8 and FIG. 9, the check valve 61 includes a generally cylindrical tip tubular portion 611 inserted into the seventh space Z7, and a generally cylindrical male thread portion 612 having a diameter smaller than that of the tip tubular portion 611 and screwed into the check valve piston 62. The check valve 61 including these elements has a generally cylindrical shape and has an inner space running through the check valve 61 in the flow direction D.

In more detail, the tip tubular portion 611 is formed to have an outer diameter generally equal to the inner diameter of the seventh space Z7 of the third flow path Z, and a portion thereof around a generally central position in the flow direction D is cut out.

The tip tubular portion 611 has an O-ring 65 attached to a recessed groove (represented with no reference sign) provided in the circumferential direction at an end thereof on the upstream side Du. The O-ring 65 is an elastic member that is held by the tip tubular portion 611 and the check valve piston 62 and seals a gap between the tip tubular portion 611 and the seventh space Z7 of the third flow path Z.

Meanwhile, the male thread portion 612 is formed to have a generally cylindrical shape and has an inner space communicating to the seventh space Z7 via the inner space of the tip tubular portion 611. The male thread portion 612 has an O-ring 66 attached to a base portion thereof on the downstream side Dd. The O-ring 66 is an elastic element that seals a gap between the male thread portion 612 and the check valve piston 62.

As shown in FIG. 8 and FIG. 9, the check valve piston 62 includes a generally cylindrical external fitting portion 621, a generally cylindrical female thread portion 622 and a cylindrical portion 623 having a generally cylindrical shape. The check valve piston 62 including these elements is formed to have a generally cylindrical shape and has an inner space running through the check valve piston 62 in the flow direction D.

Specifically, the external fitting portion 621 is formed to have a generally cylindrical shape and is externally fit to the tip tubular portion 611 of the check valve 61. As shown in FIG. 8, the external fitting portion 621 is configured to hold, together with the check valve 61, the O-ring 65 and the O-ring 66 described above in a state where the check valve 61 is assembled to the external fitting portion 621.

The female thread portion 622 has a generally cylindrical shape having an outer diameter slightly smaller than that of the external fitting portion 621, and extends from the external fitting portion 621 to the upstream side Du. The male thread portion 612 of the check valve 61 is screwable into the female thread portion 622.

As shown in FIG. 8 and FIG. 9, the cylindrical portion 623 has a generally cylindrical shape having inner and outer diameters generally equal to those of the female thread portion 622, and extends to the upstream side Du. The cylindrical portion 623 includes a diameter-expanded portion 624 formed by expanding the diameter of a generally central portion, in in the flow direction D, of an outer circumferential surface thereof such that the diameter-expanded portion 624 has a generally mountain-shaped cross-section.

The cylindrical portion 623 has an O-ring 67 fit into a recessed groove (represented with no reference sign) formed in the circumferential direction at an end, on the upstream side Du, of an outer circumferential surface thereof. The O-ring 67 has a cross-shaped cross-section and is an elastic member that seals a gap between the cylindrical portion 623 and the check valve housing 64.

As shown in FIG. 8 and FIG. 9, the third coil spring 63 is located between the male thread portion 612 of the check valve 61 and the check valve housing 64 in the inner space of the check valve piston 62.

The third coil spring 63 is configured to contact, at an end thereof on the upstream side Du, the reaction force support portion 647a of the check valve housing 64 described below and to urge, by an elastic force thereof, the check valve 61 screwed with the check valve piston 62 to the downstream side Dd.

As shown in FIG. 8 and FIG. 9, the check valve housing 64 includes a generally cylindrical downstream-side tubular portion 641, a cylindrical portion 642 having a generally cylindrical shape, a generally cylindrical middle tubular portion 643, a generally annular partition plate 644, a generally cylindrical upstream-side cylindrical portion 645 and a generally cylindrical female thread portion 646, which are formed integrally with each other from the downstream side Dd to the upstream side Du.

In the check valve housing 64, the downstream-side tubular portion 641 and the cylindrical portion 642 are located in the fifth space Z5, the middle tubular portion 643 and the partition plate 644 are located in the fourth space Z4, and the upstream-side cylindrical portion 645 and the female thread portion 646 are located in the third space Z3.

Specifically, as shown in FIG. 8 and FIG. 9, the downstream-side tubular portion 641 has a generally cylindrical shape having an inner diameter generally equal to that of the diameter-expanded portion 624 of the check valve piston 62 and an outer diameter smaller than the diameter of the seventh space Z7. The downstream-side tubular portion 641 includes an end portion thereof on the downstream side Dd that has a decreased diameter.

As shown in FIG. 8 and FIG. 9, the cylindrical portion 642 is formed to have a generally cylindrical shape having an outer diameter generally equal to the diameter of the fifth space Z5.

The cylindrical portion 642 has a recessed portion (represented with no reference sign) formed in an end surface, on the downstream side Dd, of the downstream-side tubular portion 641. The recessed portion is recessed to the upstream side Du inside the downstream-side tubular portion 641 and has a generally circular cross-section having a diameter slightly smaller than the inner diameter of the downstream-side tubular portion 641.

The recessed portion of the cylindrical portion 642 and the downstream-side tubular portion 641 form a fitting space 647 externally fit to the check valve piston 62.

A bottom portion of the fitting space 647 acts as the reaction force support portion 647a causing the third coil spring 63 to generate a reaction force.

In addition, the cylindrical portion 642 has four through-holes 642a formed radially outward of the downstream-side tubular portion 641, at a predetermined interval in the circumferential direction. The through-holes 642a run through the cylindrical portion 642 in the flow direction D of the third flow path Z.

As shown in FIG. 8 and FIG. 9, the middle tubular portion 643 is formed to have a generally cylindrical shape having an outer diameter larger than that of the cylindrical portion 642 and generally equal to that of the fourth space Z4. The middle tubular portion 643 is formed such than an inner space thereof is in communication with the through-holes 642a of the cylindrical portion 642.

The middle tubular portion 643 has an O-ring 68 fit into a recessed groove (represented with no reference sign) provided in an outer circumferential surface thereof in the circumferential direction. The O-ring 68 is an elastic member that seals a gap between the middle tubular portion 643 and the fourth space Z4.

As shown in FIG. 8 and FIG. 9, the partition plate 644 is a generally annular flat plate having a thickness in the flow direction D and having an outer diameter generally equal to that of the cylindrical portion 642. The partition plate 644 is provided to partition the middle tubular portion 643 and the upstream-side cylindrical portion 645 from each other such that the middle tubular portion 643 and the upstream-side cylindrical portion 645 are communicable to each other.

The partition plate 644 has an O-ring 69 fit into a recessed groove (represented with no reference sign) provided in an outer circumferential surface thereof in the circumferential direction. The O-ring 69 is an elastic member that seals a gap between the partition plate 644 and the second filter 90.

As shown in FIG. 8 and FIG. 9, the upstream-side cylindrical portion 645 extends in the flow direction and is formed to have a generally cylindrical shape. The upstream-side cylindrical portion 645 includes a portion, on the downstream side Dd, having an outer diameter smaller than that of the partition plate 644. The upstream-side cylindrical portion 645 has four flow holes 64a, through which the gas is flowable, formed at a predetermined interval in the circumferential direction. The flow holes 64a run through the upstream-side cylindrical portion 645 in the radial direction.

As shown in FIG. 8 and FIG. 9, the female thread portion 646 is formed to have a generally cylindrical shape having an outer diameter generally equal to that of the partition plate 644 and an inner diameter generally equal to that of the upstream-side cylindrical portion 645. The female thread portion 646 has an outer circumferential surface formed as a contact surface contacting an O-ring 94 described below.

In the check valve mechanism 60 having such a configuration, the check valve 61 having the O-ring 65 and the O-ring 66 attached thereto and a check valve piston 62 having the third coil spring 63 assembled thereto are housed in the check valve housing 64 to form an assembly.

Now, with reference to FIG. 10 through FIG. 13, an operation of the depressurization safety valve mechanism 30 and the check valve mechanism 60 will be briefly described.

A valve-closed state, as shown in FIG. 2, in which the open/close valve 24 seals the flow path bottom portion X1 of the first flow path X is defined as an initial state of the open/close valve mechanism 20.

A valve-closed state, as shown in FIG. 5, in which the depressurization valve 31 moves to the upstream side Du and the first relief valve 37 and the second relief valve 38 seal the communication path 365 of the upstream-side housing 36 is defined as an initial state of the depressurization safety valve mechanism 30.

A valve-closed state, as shown in FIG. 8, in which the check valve 61 and the check valve piston 62 seal the seventh space Z7 of the third flow path Z is defined as an initial state of the check valve mechanism 60.

First, in the state, as shown in FIG. 2, in which the open/close valve 24 is at a closed position, the rotatable handle 21 is rotated in a direction in which the rotatable handle 21 is loosened, so that the open/close valve 24 is transferred to an open position. When this is performed, the gas filling the cylinder flows into the flow path top portion X2 of the first flow path X from the flow path bottom portion X1 of the first flow path X, and then passes through the second flow path Y and flows into the third space Z3 of the third flow path Z.

Then, as shown in FIG. 5 and FIG. 8, the gas flowing into the third space Z3 flows to the inside of the depressurization safety valve mechanism 30 and the check valve mechanism 60 via the second filter 90 described below and the flow holes 64a of the check valve housing 64.

As shown in FIG. 5, the gas flowing to the inside of the depressurization safety valve mechanism 30 passes through the inner space of the depressurization valve 31, the inner space of the depressurization piston 32 and the inner space of the depressurization valve tubular body 35 in the initial state, and reaches the downstream-side recessed portion 364 and the communication path 365 of the upstream-side housing 36.

At this point, when a difference between the pressure in the space partitioned by the downstream-side housing 33 and the combination of the depressurization piston 32 and the depressurization valve tubular body 35, and the pressure of the gas that has reached the downstream-side recessed portion 364 and the communication path 365, exceeds an urging force of the first coil spring 34 urging the flange 353 of the depressurization valve tubular body 35 to the upstream side Du, the depressurization valve 31, the depressurization piston 32 and the depressurization valve tubular body 35 integrally move, as shown in FIG. 10, to the downstream side Dd against the urging force of the first coil spring 34.

In the case where the difference in the pressures is lower than the urging force of the first coil spring 34, the depressurization valve 31, the depressurization piston 32 and the depressurization valve tubular body 35 move, as shown in FIG. 5, to the upstream side Du by the urging force of the first coil spring 34.

In this manner, the depressurization valve 31, the depressurization piston 32 and the depressurization valve tubular body 35 repeatedly move to the upstream side Du and the downstream side Dd at a high speed by the difference in the pressure, so that the pressure of the gas flowing into the check valve mechanism 60 is decreased.

In the case of an excessive pressure state, in which the pressure of the gas flowing to the inside of the depressurization safety valve mechanism 30 is excessively high, the gas in the excessive pressure state moves, as shown in FIG. 11, the first relief valve 37 and the second relief valve 38 sealing the communication path 365 of the upstream-side housing 36 to the upstream side Du against the urging force of the second coil spring 40.

The gas flowing into the relief valve housing 366 of the upstream-side housing 36 from the communication path 365 of the upstream-side housing 36 is released outside through an opening, not shown, of the upstream-side housing 36 via the through-holes 41a of the relief valve case 41.

As shown in FIG. 8, the gas flowing to the inside of the check valve mechanism 60 via the flow holes 64a passes through the inner space of the partition plate 644, the inner space of the middle tubular portion 643 and the through-holes 642a of the cylindrical portion 642 of the check valve housing 64 to reach the fifth space Z5 and the sixth space Z6 of the third flow path Z.

At this point, when the difference between the pressure of the inner space of the check valve 61, the inner space of the check valve piston 62 and the fitting space 647 sealed by the O-ring 65, the O-ring 66 and the O-ring 67 and the pressure of the gas that has reached the third flow path Z exceeds the urging force of the third coil spring 63 urging the check valve 61 to the downstream side Dd, the check valve 61 and the check valve piston 62 in the closed state integrally move, as shown in FIG. 12, to the upstream side Du against the urging force of the third coil spring 63 and are transferred to an open state.

Therefore, the gas flowing to the inside of the check valve mechanism 60 passes through the seventh space Z7 of the third flow path Z and flows into a pipe connected to the connection portion 15 of the outlet portion 13.

In the state where the gas is in the pipe connected to the connection portion 15 of the outlet portion 13, the remaining amount of the gas in the cylinder is decreased, so that the pressure of the gas is decreased.

At this point, when the above-described difference in the pressure is lower than the urging force of the third coil spring 63 urging the check valve 61 to the downstream side Dd, the check valve 61 and the check valve piston 62 move, as shown in FIG. 8, to the downstream side Dd and are transferred to the closed state.

The valve device 1 operable in this manner includes the first filter 70, the securing member 80 and the second filter 90 in order to inhibit foreign substances from entering the open/close valve mechanism 20 operable by a rotation operation made on the rotatable handle 21 and also from entering the depressurization safety valve mechanism 30 and the check valve mechanism 60 operable by the difference in the pressure.

In more detail, as shown in FIG. 2, the first filter 70 of the valve device 1 is located in the filter attachment portion 14 of the valve body 10, and thus inhibits flow of the foreign substances and also inhibits entrance of the foreign substances to the open/close valve mechanism 20.

As shown in FIG. 2 and FIG. 13, the first filter 70 includes a three-dimensional filter body 71 protruding to the upstream side Du and an annular flange 72 provided at an edge, on the downstream side Dd, of the filter body 71. The three-dimensional filter body 71 and the annular flange 72 are formed integrally with each other.

Specifically, as shown in FIG. 2 and FIG. 13, the filter body 71 is a sintered filter formed of sintered metal beads, and is formed to have a cross-section having a portion recessed to the upstream side Du (downward) and to have a main surface crossing the flow direction D.

In more detail, as shown in FIG. 2 and FIG. 13, the filter body 71 is formed to have a hollow and generally truncated conical shape having inner and outer diameters that become smaller as the filter body 71 extends to the upstream side Du from the downstream side Dd.

The filter body 71 is formed such that a portion thereof on the downstream side Dd having a largest diameter has an inner diameter generally equal to the diameter of the flow path bottom portion X1 of the first flow path X and has an outer diameter smaller than an inner diameter of the filter attachment portion 14.

The filter body 71 having such a configuration has an inner circumferential surface having an area size generally equal to a value calculated based on a cross-sectional area of the fluid flow path F. Specifically, the inner circumferential surface of the filter body 71 is formed to have an area size generally equal to a value obtained by dividing the cross-sectional area of the flow path bottom portion X1 by the filtering precision.

The filter body 71 has a top end surface (end surface on the downstream side Dd) including a flat planar surface 71a perpendicular to the up-down direction and an inclining surface 71b inclining radially outward and downward from an outer circumferential edge of the planar surface 71a.

As shown in FIG. 2 and FIG. 13, the filter flange 72 is a metallic flat plate having a thickness in the up-down direction, and has an annular shape, as seen in a plan view, having an outer diameter generally equal to the inner diameter of the filter attachment portion 14 and an inner diameter generally equal to the inner diameter of a portion, on the downstream side Dd, of the filter body 71 and also equal to the diameter of the flow path bottom portion X1 of the first flow path X.

The filter flange 72 is formed integrally with the filter body 71 by the sintering of the metal beads.

The filter flange 72 has a bottom surface having a recessed portion 72a having a generally truncated conical shape of a diameter becoming smaller as extending upward. The filter body 71 is fit into the recessed portion 72a.

Specifically, the recessed portion 72a has a generally truncated conical shape and has a bottom surface contacting the planar surface 71a of the filter body 71 and a circumferential surface contacting the inclining surface 71b of the filter body 71.

As shown in FIG. 2, in a state where the filter flange 72 having such a configuration is assembled to the filter attachment portion 14, the securing member 80 is pressed onto a bottom surface, of the filter flange 72, radially outward of the recessed portion 72a, and a top surface of the filter flange 72 contacts the bottom surface of the filter attachment portion 14.

As shown in FIG. 2 and FIG. 13, the securing member 80 of the valve device 1 has a generally cylindrical shape and extends in the flow direction D. The securing member 80 includes a male thread portion 81 screwed into the filter attachment portion 14 of the valve body 10 and a hexagonal head 82 having a generally hexagonal shape and exposed to the outside of the filter attachment portion 14 in a state where the securing member 80 is assembled to the valve body 10. The male thread portion 81 and the hexagonal head 82 are formed integrally with each other.

Specifically, as shown in FIG. 2, the male thread portion 81 is formed to have a generally cylindrical shape having an outer diameter slightly smaller than that of the filter flange 72 of the first filter 70 and an inner diameter slightly larger than an outer diameter of the recessed portion 72a of the filter flange 72.

As shown in FIG. 2 and FIG. 13, the hexagonal head 82 is formed to have a hexagonal tubular shape having an inner diameter generally equal to that of the male thread portion 81 and an outer shape larger than that of the male thread portion 81.

In a state where the securing member 80 having such a configuration is screwed with the filter attachment portion 14 having the first filter 70 located therein, a top end surface (end surface on the downstream side Dd) of the male thread portion 81 presses the bottom surface of the filter flange 72, so that a top surface of the filter flange 72 adheres to the bottom surface of the filter attachment portion 14.

Therefore, the gas introduced into, for example, the first flow path X passes through the filter body 71 of the first filter 70 to flow into the flow path bottom portion X1 of the first flow path X. In this manner, the valve body 10 inhibits foreign substances from flowing through the fluid flow path F and also inhibits foreign substances from entering the open/close valve mechanism 20.

As shown in FIG. 3, the second filter 90 of the valve device 1 is attached to an outer circumferential surface of the check valve housing 64 of the check valve mechanism 60 to inhibit the flow of foreign substance and also to inhibit the entrance of foreign substances to the depressurization safety valve mechanism 30 and the check valve mechanism 60.

The second filter 90 is attached in advance to the check valve mechanism 60 screwed with the depressurization safety valve mechanism 30, and is assembled to the outlet portion 13 of the valve body 10 together with the depressurization safety valve mechanism 30 and the check valve mechanism 60.

As shown in FIG. 8 and FIG. 9, the second filter 90 has a generally cylindrical shape and extends in the flow direction D of the third flow path Z. The second filter 90 includes a generally cylindrical filter body 91, a generally cylindrical upstream-side tubular portion 92 provided at an end, on the upstream side Du, of the filter body 91, and a generally cylindrical downstream-side tubular portion 93 provided at an end, on the downstream side Dd, of the filter body 91. The filter body 91, the upstream-side tubular portion 92 and the downstream-side tubular portion 93 are formed integrally with each other.

Specifically, as shown in FIG. 8, the filter body 91 is a sintered filter formed of sintered metal beads, and is formed to have a generally cylindrical shape having an inner diameter slightly larger than the outer diameter of the partition plate 644 of the check valve housing 64.

As shown in FIG. 8, the filter body 91 is formed to be sufficiently long, in the flow direction D, to bridge over the upstream-side cylindrical portion 645 of the check valve housing 64.

As shown in FIG. 8 and FIG. 9, the upstream-side tubular portion 92 has a generally cylindrical shape having inner and outer diameters generally equal to those of the filter body 91, and is formed to have a length, in the flow direction D, that is shorter than that of the filter body 91.

In addition, the upstream-side tubular portion 92 has the O-ring 94 fit to a recessed groove 92a provided in an inner circumferential surface thereof in the circumferential direction. The O-ring 94 is an elastic member that seals a gap between the upstream-side tubular portion 92 and the upstream-side cylindrical portion 645 of the check valve housing 64.

As shown in FIG. 8 and FIG. 9, the downstream-side tubular portion 93 has a generally cylindrical shape having inner and outer diameters generally equal to those of the filter body 91, and is formed to have a length, in the flow direction D, that is shorter than that of the filter body 91.

The upstream-side tubular portion 92 and the downstream-side tubular portion 93 are integrally formed with the filter body 91 by the sintering of the metal beads.

As shown in FIG. 8, in a state where the second filter 90 having such a configuration is attached to the outer circumferential surface of the check valve housing 64 of the check valve mechanism 60, an inner circumferential surface of the filter body 91 is located to face an outer circumferential surface of the upstream-side tubular portion 645, the inner circumferential surface of the upstream-side tubular portion 92 is located to face an outer circumferential surface of the female thread portion 646, and an inner circumferential surface of the downstream-side tubular portion 93 is located to face the outer circumferential surface of the partition plate 644.

In this state, a gap between the upstream-side tubular portion 92 of the second filter 90 and the female thread portion 646 of the check valve housing 64 is sealed by the O-ring 94, and a gap between the downstream-side tubular portion 93 of the second filter 90 and the partition plate 644 of the check valve housing 64 is sealed by the O-ring 69.

Therefore, the gas introduced from, for example, the second flow path Y passes through the filter body 91 of the second filter 90 and flows into the flow holes 64a of the check valve housing 64. In this manner, the valve device 1 inhibits foreign substances from flowing through the fluid flow path F and also inhibits foreign substances from entering the depressurization safety valve mechanism 30 and the check valve mechanism 60.

As described above, the valve device 1 in this embodiment includes the valve body 10 including the attachment portion 11 attachable to a cylinder and having the fluid flow path F, through which the gas is flowable, formed therein, and also includes the open/close valve 24 opening or closing the fluid flow path F inside the valve body 10.

The valve device 1 further includes the first filter 70 attached to the filter attachment portion 14 provided in the fluid flow path F of the attachment portion 11, and the securing member 80 securing the first filter 70 to the filter attachment portion 14.

The filter 70 includes the filter body 71 formed of sintered metal beads to have such a shape as to cause at least a portion thereof to cross the flow direction D of the gas, and the metal filter flange 72 formed to have a generally annular and generally flat plate-like shape provided along a circumferential edge of the filter body 71. The securing member 80 is pressed onto the filter flange 72. The filter body 71 and the filter flange 72 are formed integrally with each other.

According to this configuration, the securing member 80 is pressed onto the filter flange 72 of the first filter 70. Therefore, when the first filter 70 is to be secured to the filter attachment portion 14, the securing to the filter attachment portion 14 is performed without pressing the filter body 71 formed of sintered metal beads.

Accordingly, the valve device 1 prevents a situation where the filter body 71, which is formed of sintered metal beads and thus has a low mechanical strength, is deformed by being secured to the filter attachment portion 14 and as a result, the filtering precision is changed or the filter body 71 is broken. Therefore, the valve device 1 secures the first filter 70 to the valve body 10 without breaking the first filter 70 and thus inhibits flow of foreign substances.

The filter body 71 is formed to have a three-dimensional shape protruding downward. Therefore, the valve device 1 allows the filter body 71 to have a larger surface area with certainty as compared with the case of, for example, a flat plate-like filter body. With this configuration, the valve device 1 suppresses decrease in the flowability of the gas.

The filter body 71 is formed to have a truncated conical shape having a diameter that gradually becomes smaller as the filter body 71 extends downward. Therefore, the valve device 1 allows the filter body 71 to have a larger surface crossing the flow direction D as compared with the case of, for example, a bottomed cylindrical filter body and suppresses more the decrease in the flowability of the gas and inhibits the flow of foreign substances.

In addition, it is more difficult for the securing member 80 to contact the filter body 71 than, for example, a bottomed cylindrical filter body. Therefore, when pressing the securing member 80 onto the filter flange 72 of the first filter 70, the valve device 1 prevents the filter body 71 from being broken by contact of the filter body 71 with the securing member 80.

The filter flange 72 is formed integrally with the filter body 71 by sintering. Therefore, the valve device 1 integrates the filter body 71 and the filter flange 72 to each other with certainty.

Accordingly, the valve device 1 prevents the filter body 71 from being separated from the filter flange 72 by the pressure caused at the time of the passage of the gas, and thus inhibits the flow of foreign substances with certainty.

The filter flange 72 has the recessed portion 72a having a size generally equal to that of an outer circumferential surface of the filter body 71 and recessed upward. At least a portion of the filter body is fit into the recessed portion 72a.

According to this configuration, at least a portion of the filter body 71 is fit into the recessed portion 72a of the filter flange 72, so that an area along which the filter body 71 and the filter flange 72 contact each other has a sufficiently large size with certainty. Therefore, the valve device 1 integrates the filter body 71 and the filter flange 72 to each other with certainty.

In addition, the filter body 71 is positioned with respect to the filter flange 72 by the recessed portion 72a. Therefore, the valve device 1 prevents, with more certainty, the securing member 80 from contacting the filter body 71.

Accordingly, the valve device 1 allows the first filter 70 to be secured to the valve body 10 without breaking the filter body 71 and to have an improved strength.

An innermost circumferential surface of the filter flange 72 is formed to have a size generally equal to that of the inner circumferential surface of the first flow path X of the fluid flow path F as seen in the up-down direction. Therefore, the valve device 1 prevents the flow of the gas from being inhibited by the filter flange 72 and inhibits the flow of foreign substances.

The securing member 80 is a tubular body having an inner circumferential surface larger than that of the filter flange 72 and is screwed with the filter attachment portion 14.

According to this configuration, the first filter 70 is attached or detached merely by screwing the securing member 80 into, or out of, the valve body 10. Therefore, as compared with the case where the first filter 70 is press-fit to be secured, the first filter 70 is secured more firmly and is attached and detached more easily.

In addition, while the securing member 80 is screwed into, or out of, the valve body 10, the filter body 71 and the securing member 80 do not slide against each other. Therefore, the valve device 1 prevents the filter body 71 from being broken by the sliding of the filter body 71 and the securing member 80.

The filter body 71 is formed to have a cross-section having a recessed portion such that the filter body 71 protrudes downward, and an inner circumferential surface thereof has an area size defined based on the cross-sectional area of the flow path bottom portion X1 of the first flow path X and the filtering precision.

According to this configuration, the valve device 1 further suppresses the decrease in the flowability of the gas and inhibits the flow of foreign substances.

The attached portion according to the present invention corresponds to the cylinder in the embodiment; and similarly,
the fluid corresponds to the gas,
the filter corresponds to the first filter 70;
the securing member corresponds to the securing member 80;
the annular body corresponds to the filter flange 72; and
the protrusion direction corresponds to the downward direction.

However, the present invention is not limited to the configuration in the above-described embodiment, and may be carried out in any of many embodiments.

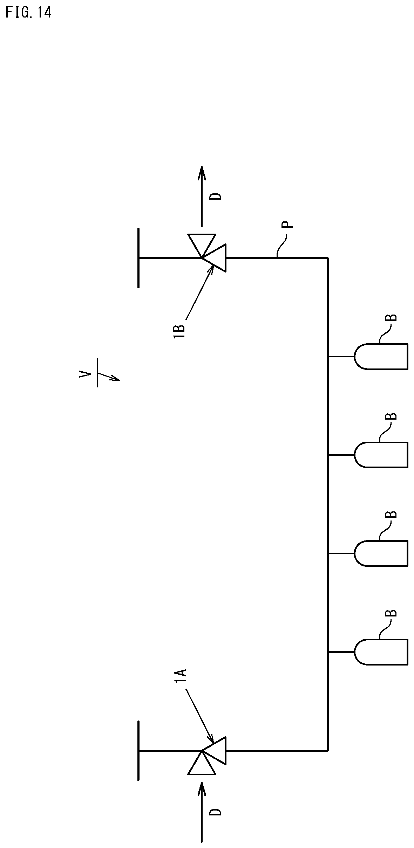

For example, in the above-described embodiment, the valve device 1 is attached to the cylinder. The present invention is not limited to this, and the valve device 1 may be connected to a pipe P of a bundle device V (also referred to as a cradle device), which is an assembly of a plurality of cylinders B, as shown in FIG. 14. FIG. 14 is a schematic structural view of the bundle device V, to which the valve device is connectable.

In this case, the valve device 1 is a filling-side valve device 1A causing the gas to flow in a cylinder B and/or a consumption-side valve device 1B causing the gas to flow in a consuming device (not shown) consuming the gas.

The valve body 10 includes the attachment portion 11, the body portion 12 and the outlet portion 13. The present invention is not limited to this, and the valve body 10 may have any shape suitable to the connection of pipes. In this case, the first filter 70 may be attached to an attachment portion of a valve body attachable at least to the pipe on the upstream side Du.

The valve device 1 includes the depressurization safety valve mechanism 30 and the check valve mechanism 60. The present invention is not limited to this, and the valve device 1 may include either one of the depressurization safety valve mechanism 30 and the check valve mechanism 60 or may include only the safety valve unit of the depressurization safety valve mechanism 30.

Alternatively, the valve device 1 may include neither the depressurization safety valve mechanism 30 nor the check valve mechanism 60.

The valve device 1 includes the second filter 90. Alternatively, the valve device 1 may not include the second filter 90.

The first filter 70 has a generally circular shape as seen in a bottom view and is attached to the filter attachment portion 14 having a generally circular shape as seen in a bottom view. The present invention is not limited to this, and the first filter 70 may have a generally rectangular shape as seen in a bottom view and be attached to the filter attachment portion 14 having a generally rectangular shape as seen in a bottom view, or may have a generally polygonal shape as seen in a bottom view and be attached to the filter attachment portion 14 having a generally polygonal shape as seen in a bottom view.

The filter body 71 and the filter flange 72 of the first filter 70 are formed integrally with each other by sintering of metal beads. The present invention is not limited to this, and the filter body 71 and the filter flange 72 of the first filter 70 may be formed integrally with each other by bonding.

The filter body 71 of the first filter 70 has a generally truncated conical shape protruding downward. The present invention is not limited to this, and the filter body 71 may have a generally truncated conical shape protruding upward. In this case, the recessed portion 72a is formed in the top surface (end surface on the downstream side Dd) of the filter flange 72.

Alternatively, the filter body 71 may be formed to have a bottomed tubular shape or a generally bell-like shape protruding downward and upward.

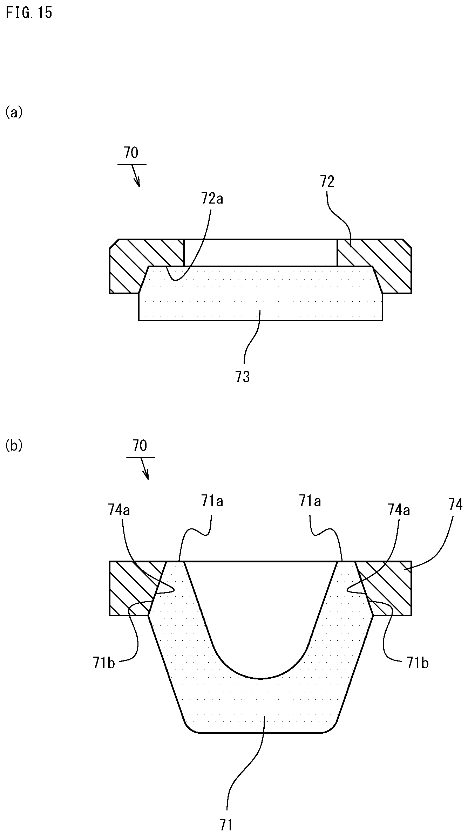

The filter body 71 of the first filter 70 has a three-dimensional shape that has a cross-section having a recessed portion. The present invention is not limited to this. In another embodiment, the first filter 70 may include a flat plate-like filter body 73 as shown in FIG. 15(a). In this case, the filter flange 72 may have the recessed portion 72a, into which a portion, on the downstream side Dd, of the filter body 73 is fit. Alternatively, the filter flange 72 may have a generally annular shape, as seen in a bottom view, having an inner diameter equal to an outer diameter of the filter body 73.

The filter body 71 of the first filter 70 is fit to the recessed portion 72a of the filter flange 72. The present invention is not limited to this. For example, the filter body and the filer flange may be formed integrally with each other such that an end surface of the filter body 71 contacts a main surface of the filter flange having no recessed portion 72a.

Alternatively, as shown in FIG. 15(b), which shows a cross-section of the first filter 70 in still another embodiment, the filter body 71 and a filter flange 74 may be formed integrally with each other such that the inclining surface 71b of the filter body 71 contacts an inner circumferential surface 74a, of the filter flange 74, which inclines to be generally parallel to the inclining surface 71b of the filter body 71.

The first filter 70 is secured to the filter attachment portion 14 by the securing member 80. The present invention is not limited to this, and the first filter 70 may be press-fit to be secured to the filter attachment portion 14. In this case, the filter flange 72 of the first filter 70 is a portion onto which a press-fit jig is pressed.

### REFERENCE SIGNS LIST

- 1: valve device
- 10: valve body
- 11: attachment portion
- 14: filter attachment portion
- 24: open/close valve
- 70: first filter
- 71: filter body
- 72: filter flange
- 72a: recessed portion
- 80: securing member
- D: flow direction
- F: fluid flow path

## Claims

1. A valve device including a valve body that includes an attachment portion attachable to an attached portion and has a fluid flow path, through which a fluid is flowable, formed therein, and including an open/close valve opening or closing the fluid flow path in the valve body, the valve device comprising:
a filter attached to a filter attachment portion provided in the fluid flow path of the attachment portion; and
a securing member securing the filter to the filter attachment portion,
wherein the filter includes:
a filter body formed of sintered metal beads to have such a shape as to cause at least a portion thereof to cross a flow direction of the fluid, and
a metallic annular body formed to have an annular and generally flat plate-like shape provided along a circumferential edge of the filter body and having the securing member pressed thereto, the annular body being formed integrally with the filter body.

2. The valve device according to claim 1, wherein the filter body is formed to have a three-dimensional shape protruding in a protrusion direction along a thickness direction of the annular body.

3. The valve device according to claim 2, wherein the filter body is formed to have a generally truncated conical shape having a diameter that gradually becomes smaller as the filter body extends in the protrusion direction.

4. The valve device according to claim 2, wherein the annular body is formed integrally with the filter body by sintering.

5. The valve device according to claim 4, wherein the annular body has a recessed portion having a size generally equal to that of an outer circumferential surface of the filter body, recessed in the thickness direction of the annular body, and having at least a portion of the filter body fit thereto.

6. The valve device according to claim 4, wherein an innermost circumferential surface of the annular body is formed to have a size generally equal to that of an inner circumferential surface of the fluid flow path as seen in the thickness direction of the annular body.

7. The valve device according to claim 1, wherein the securing member is a tubular body having an inner circumferential surface larger than an inner circumferential surface of the annular body, and is screwed with the filter attachment portion.

8. The valve device according to claim 2, wherein the filter body is formed to have a cross-section having a recessed portion such that the filter body protrudes in the protrusion direction and has an inner circumferential surface having an area size defined based on a cross-sectional area of the fluid flow path and a filtering precision.
